# EUROPEAN PATENT APPLICATION

(11) **EP 3 597 350 A1**
(43) Date of publication of application: **22.01.2020**
(21) Application number: 19186875.1
(22) Date of filing: 18.07.2019
(51) Int. Cl.: B23K 20/12

(54) **METHOD FOR COATING A WORKPIECE, WORKPIECE, COATING MACHINE, AND USE OF A FRICTION-WELDING APPARATUS**

(30) Priority: 20.07.2018 DE 102018212156
(71) Applicant: TE Connectivity Germany GmbH, 64625 Bensheim (DE); Technische Universität Ilmenau, 98693 Ilmenau (DE)
(72) Inventor: HAUCK, Uwe, 14532 Kleinmachnow (DE); SCHMIDT, Helge, 67346 Speyer (DE); BERGMANN, Jean Pierre, 99096 Erfurt (DE); REGENSBURG, Anna, 87494 Rückholz (DE)
(74) Representative: Grünecker Patent- und Rechtsanwälte PartG mbB

(57) **Abstract**

A method for coating a workpiece (5) is shown, wherein an applied coating material (10) is friction-welded to the workpiece (5). A workpiece according to the invention comprises a coating (20), (21) applied using the method. A coating machine (100) comprises a friction body (1) for coating the workpiece (5). Furthermore, the use of a friction-welding apparatus for coating a workpiece (5) is shown.

## Description

The invention relates to a method for coating a workpiece, a workpiece, a coating machine, and use of a friction-welding apparatus.

In order to secure a contact element to a workpiece, attachment using an ultrasound welding method, for example, is known. Joining by welding or soldering is also possible. With soldering, under some circumstances it is necessary to pretreat the surface of the workpiece, with chemicals for instance. This can be laborious.

The problem of the invention is to provide a simpler solution for coating a workpiece.

This is solved, according to the invention, by an applied coating material being friction-welded to the workpiece.

In the case of a workpiece according to the invention, a coating is present which has been applied using a method according to the invention.

A coating machine according to the invention is characterised in that a friction body for coating the workpiece is present.

The invention also envisages the use of a friction-welding apparatus for coating a workpiece.

In the case of the solution according to the invention, it is not necessary to pretreat the surface. The coating material is pressed with high pressure and with friction onto the workpiece. By way of the friction arising during the method, the coating material is joined to the workpiece by blending of the materials and diffusion. The coating technique according to the invention can also be used in particular for the selective coating of small regions.

The solution according to the invention can be further improved with the following configurations and further developments, which are themselves each advantageous and which can be combined with one another as desired.

The workpiece can consist of aluminium or can have aluminium. For example, it can consist of an aluminium alloy or can comprise this. The workpiece can further consist of magnesium or can comprise magnesium, for example can consist of a magnesium alloy or can comprise this. Such materials can make easy construction possible. Alternatively or in addition, the workpiece can comprise titanium or a titanium alloy, for example if it is important that the material is inert.

A solderable material can be used as the coating material. In such a configuration, soldered joints can be produced at the coated location.

The solderable material can have a higher melting point than the material of the workpiece. For example, this can be silver, copper, nickel, gold, palladium and alloys of these metals. The use of materials with a lower melting point, in particular tin, zinc, antimony, tellurium, bismuth, phosphorus, cadmium, germanium or alloys of these metals and high-melting metals is also possible.

The coating material can be a contact material, which makes an electrically releasable contacting possible. These are, in particular, silver, gold, palladium, nickel, tin and zinc, as well as alloys of these and high-melting metals.

Alternatively or in addition, the coating material can be a bondable material, for example pure aluminium, gold, nickel and/or silver.

The frictional heat can be produced, in particular, by rotation of the friction body. Alternatively, an oscillating or linear movement can be used. The movement for producing the friction can be, in particular, a rotational movement, in order to keep the space requirement low.

The method can be similar to a friction-welding method and/or to a friction stir welding method.

In an advantageous configuration, the coating material can be applied as a powder. This can make easy dosing and application possible.

In a further advantageous configuration, the coating material can be applied as a sheet or a foil. Such sheets or foils can be premanufactured, for example, so that they merely have to be placed or fed using a joining tool before the coating step.

Alternatively or in addition, the coating material can be applied as a slurry. A good amount of such a slurry can be dosed, for example, so that different amounts can easily be applied for different applications. The slurry can be viscous and pasty, so that simple positioning is possible. It can also be more runny and thus make application, for example via fluid lines, possible.

In one configuration, in which simple application and good dosing are possible, the coating material is applied as a wire.

The coating machine can have a feed device for a coating material. For example, a feed device can comprise a dosing device for powder or fluid material. For example, the feed device can comprise tubes or channels for powder or fluid material.

The feed device can comprise a positioning device, with which the coating material can be positioned at the desired location.

In a particularly advantageous configuration, the coating material can be fed through a friction body. This can make a particularly simple feed and a compact construction possible.

In addition, the friction body can have a feed channel for the coating material.

In the case of a workpiece, in one advantageous configuration, the coating can be friction-welded to the rest of the workpiece.

The method can be employed to produce different coatings at different locations, in particular at neighbouring locations on the workpiece. For example, at a first location, a coating can be produced which is suitable for contacting. In an adjacent region, which can enclose the first region in particular, an anti-corrosion coating can be applied, for example, or a coating which protects against mechanical damage.

In particular, an applied coating material can be friction-welded selectively to the workpiece, so that a solderable area is generated. The solderable area can contain typical soldering metals such as tin, zinc, silver, gold or lead. The solderable area can first make possible the production of a joint by soldering and can bring about an interaction between two elements which are to be joined. Potentially interfering layers, such as oxide layers, can be chemically altered during the generation of the solderable area, for example can be reduced, or mechanically broken up or removed, in order to make good contact possible.

The invention is explained in greater detail below by way of example, on the basis of advantageous configurations with reference to the drawings. The advantageous further developments and configurations depicted in this instance are each independent of one another and can be combined with one another as desired, depending on how this is necessary in the specific application.

In the drawings:
- Fig. 1: shows a schematic view of a first embodiment of a method;
- Fig. 2: shows a schematic depiction of a workpiece with two different coatings;
- Fig. 3: shows a schematic depiction of a workpiece with a coating during attachment of a positive contact element;
- Fig. 4: shows a schematic depiction of a workpiece with a coating during contact with a non-positive contact element;
- Fig. 5: shows a schematic depiction of a further embodiment of a method;
- Fig. 6: shows a schematic depiction of a further embodiment of a method.

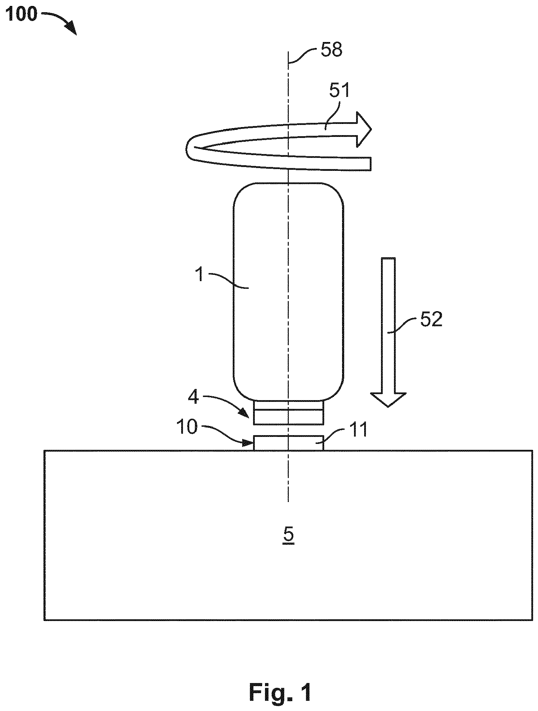

Fig. 1 shows a first embodiment of a method for coating a workpiece 5. The workpiece 5 can be an electrical component, for example a contact element or a different conducting element. The workpiece 5 can also fulfil a mechanical function. The workpiece can consist of, in particular, a material such as magnesium, aluminium or titanium or alloys with at least one of these elements.

The workpiece 5 is intended to be coated with a coating material 10, which has been applied, for example, in a previous step. The coating material 10 can comprise higher- or lower-melting materials than the workpiece 5. For example, the coating material can comprise gold, silver or palladium.

In the example shown, the coating material 10 is configured as a foil or a sheet 11, which has been punched from a larger sheet, for example. After placement onto the workpiece 5, a friction body 1 of a coating machine 100 is pressed along a press-on direction 52 onto the coating material 10. In this case, the friction body 1 rotates along a rotation direction 51 around a rotation axis 58, as a result of which heat arises at the tip 4 of the friction body 1 and in the coating material 10 and also at a surface of the friction body 5. This leads to a fusion between the coating material 10 and the workpiece 5. The coating material 10 is welded to the workpiece 5 in the manner of the friction weld or friction stir weld and forms a coating 20 on the workpiece 5.

The coating machine 100, which is depicted only schematically and partially, can have a drive for the friction body 1, a press-on device for the friction body 1, a positioning device for the coating material 10, a feed mechanism for the coating material 10 and further elements.

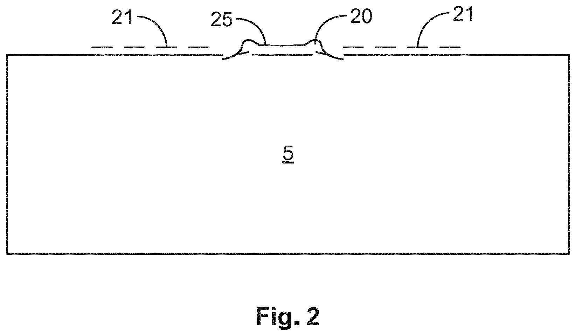

In Fig. 2, the coating 20 produced by the method according to Fig. 1 can be seen. It is arranged only on a partial region of the surface 5 of the workpiece 5. In the immediate vicinity of the coating 20, there is a further coating 21 which can be produced using the same method. The coating 21 can have different properties and can comprise a different coating material 10. For example, the coating 20 can be laid out for good contacting and can form a solderable area 25. The solderable area 25 can additionally contain materials such as tin, zinc, silver, gold or lead and can ensure that the production of a soldered joint is made possible or improved at this location. The coating 21 can ensure that there is corrosion resistance.

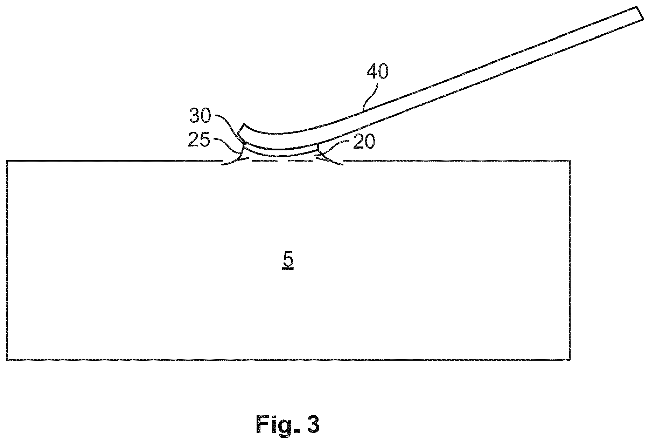

Fig. 3 shows how a contact element 40 can be soldered to the workpiece 5 by virtue of the coating 20. In this case, a solder 30 serves for the joint. The coating 20 makes a simple brazing of the contact element 40 possible, without the workpiece 5 having to be pretreated with chemicals.

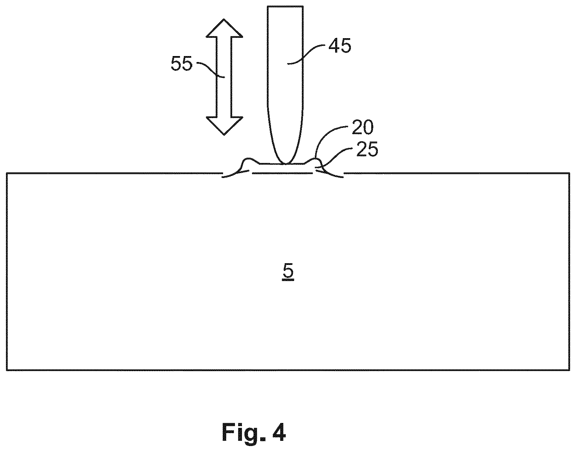

Fig. 4 shows a releasable contacting of the workpiece 5 with a contact element 45. The contact element 45 is brought along a contact direction 55 onto the coating 20. Here, the coating 20 can ensure that there is low, reproducible transition resistance between the contact element 45 and the workpiece 5.

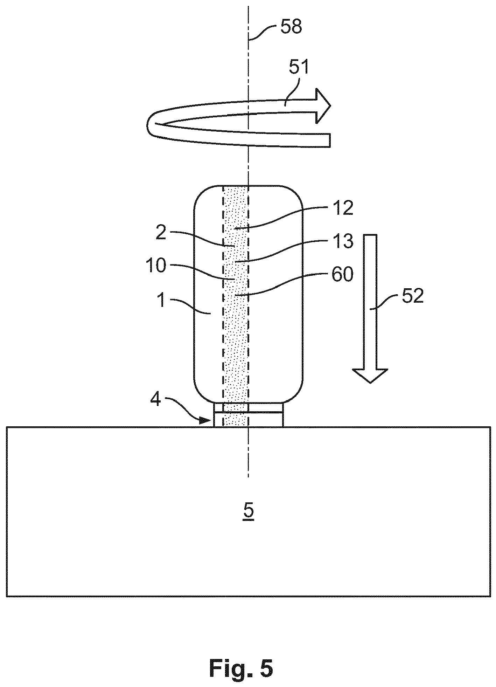

Fig. 5 shows a further configuration of a method. In the example shown here, the coating material 10 is fed as a powder 12 or a slurry 13. In addition, a feed channel 2 is present in the friction body 1, which feed channel 2 leads to the tip 4 of the friction body 1. The coating material 10 can emerge there from the feed channel 2 and can be welded to the workpiece 5 by way of the friction body 1. The feed channel 2 can, in particular, be arranged asymmetrically in the friction body 1, so that the feed channel 2 rotates around the rotation axis during a rotation. In this way, the fed coating material 10 enters automatically into a pressing region with a pressing surface, and thus can be heated. The feed channel 2 can thus, in particular, not be concentric with the rotation axis 58.

The method shown comprises, in particular, a step in which the coating material 10, similarly to what happens in the friction welding or friction stir welding, is heated by a rotation of a tool, namely the friction body 1, and is fused to, or blended or diffused with, the workpiece 5.

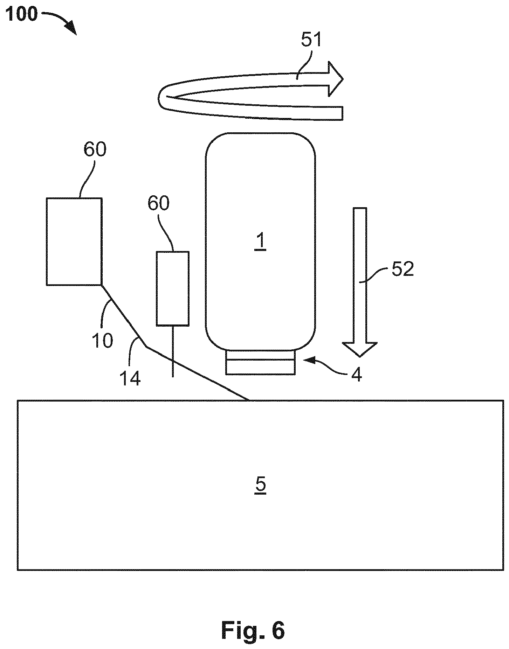

Fig. 6 shows an embodiment in which the coating material 10 is fed in the shape of a wire 14. In addition, the coating machine 100 can comprise a feed device 60, which feeds the wire 14 to the desired coating location.

### Reference symbols

- 1: friction body
- 2: feed channel
- 4: tip
- 5: workpiece
- 10: coating material
- 11: sheet
- 12: powder
- 13: slurry
- 14: wire
- 20: coating
- 21: coating
- 25: solderable area
- 30: solder
- 40: contact element
- 45: contact element
- 51: rotation direction
- 52: press-on direction
- 55: contact direction
- 58: rotation axis
- 100: coating machine

## Claims

1. A method for coating a workpiece (5), **characterised in that** an applied coating material (10) is friction-welded to the workpiece (5).

2. The method according to Claim 1, wherein the coating material (10) is applied as a powder (12).

3. The method according to any one of Claims 1 or 2, wherein the coating material (10) is applied as a foil or a sheet (11).

4. The method according to any one of Claims 1 to 3, wherein the coating material (10) is applied as a slurry (13).

5. The method according to any one of Claims 1 to 4, wherein the coating material (10) is applied as a wire (14).

6. The method according to any one of Claims 1 to 5, wherein the coating material (10) is fed through a friction body (1).

7. The method according to any one of Claims 1 to 6, wherein the workpiece (5) comprises aluminium, magnesium, titanium or alloys of these materials.

8. The method according to any one of Claims 1 to 7, wherein applied coating material (10) is friction-welded selectively to the workpiece (5), so that a solderable area (25) is generated.

9. A workpiece (5), **characterised in that** a coating (20, 21) is present, which has been applied using a method according to any one of Claims 1 to 8.

10. The workpiece (5) according to Claim 9, wherein the coating (20, 21) is friction-welded to the rest of the workpiece (5).

11. A coating machine (100), **characterised in that** a friction body (1) for coating the workpiece (5) is present.

12. The coating machine (100) according to Claim 11, wherein the coating machine (100) has a feed device (60) for a coating material (10).

13. The coating machine according to any one of Claims 11 or 12, wherein the friction body (1) has a feed channel (2) for the coating material (10).

14. Use of a friction-welding apparatus for coating a workpiece (5).
